# DEMANDE DE BREVET EUROPEEN

(11) **EP 2 476 541 A1**
(43) Date de publication de la demande: **18.07.2012**
(21) Numéro de dépôt: 12305038.7
(22) Date de dépôt: 10.01.2012
(51) Int. Cl.: B29C 70/54

(54) **Procede d'amelioration des proprietes mecaniques d'un assemblage en materiau composite**

(30) Priorité: 12.01.2011 FR 1150259
(71) Demandeur: Airbus Opérations SAS, 31060 Toulouse (FR)
(72) Inventeur: Chirol, Clément, 31290 TREBONS SUR LA GRASSE (FR); Tuery, Jean-Baptiste, 31200 TOULOUSE (FR); Bonhomme, Elodie, 31700 BLAGNAC (FR)
(74) Mandataire: Fantin, Laurent

(57) **Abrégé**

L'objet de l'invention est un procédé d'amélioration des propriétés mécaniques d'un assemblage en matériau composite comprenant au moins une pièce (10) en matériau composite dans laquelle est réalisé un alésage (12) destiné à recevoir un élément de fixation, ledit procédé comprenant une opération de matage de la paroi (14) de l'alésage consistant à solliciter en fatigue la paroi (14) de l'alésage, et ledit procédé étant caractérisé en ce qu'il prévoit de réaliser l'alésage (12) à un diamètre (D1) initial inférieur au diamètre (D2) final souhaité, puis de déformer à l'aide d'un outil de matage (16) le matériau composite constituant la paroi (14) de l'alésage de façon que les déformations engendrées agrandissent l'alésage (12) du diamètre (D1) initial jusqu'au diamètre (D2) final.

## Description

La présente invention est relative à un procédé permettant d'améliorer les propriétés mécaniques d'un assemblage en matériau composite.

Les matériaux composite sont de plus en plus utilisés pour toutes sortes d'applications, et en particulier dans le domaine aéronautique.

Par assemblage en matériau composite, l'invention entend un assemblage comprenant au moins une pièce réalisée en matériau composite.

L'invention concerne un assemblage, par exemple compris dans la structure ou dans une partie d'un aéronef, dans lequel une pièce en matériau composite est reliée à une ou plusieurs autres pièces, en matériau composite ou non, par un élément de fixation.

Plus particulièrement, l'invention est relative à un assemblage dans lequel la pièce en matériau composite comprend au moins un alésage pour la réception d'un élément de fixation.

La réalisation d'un alésage dans une pièce en matériau composite est une opération bien maîtrisée, notamment concernant l'obtention de dimensions précises.

En revanche, dans les assemblages existants, les propriétés mécaniques du matériau composite autour de chaque alésage ne permettent pas d'offrir des propriétés mécaniques optimales.

Aussi, dans les assemblages existants, et notamment d'un aéronef, il est nécessaire de multiplier le nombre d'alésages et donc d'éléments de fixation pour garantir la tenue en fatigue et la résistance aux diverses sollicitations de l'assemblage.

Il est connu de l'art antérieur différents procédés d'expansion permettant d'améliorer les caractéristiques mécaniques de la matière située au droit d'un alésage réalisé dans une pièce en matériau métallique, un mandrin étant utilisé pour expanser le diamètre de l'alésage en appliquant des efforts de compression contre la paroi de l'alésage.

Ces procédés d'expansion ne donnent pas des résultats satisfaisants lorsqu'ils sont appliqués à un alésage réalisé dans une pièce en matériau composites.

Une autre solution pour améliorer les propriétés mécaniques d'un assemblage en matériau composite consiste à monter une bague métallique en interférence dans l'alésage de la pièce en matériau composite.

Cette autre solution permet d'accroître la tenue en fatigue de l'assemblage mais elle alourdit l'ensemble ainsi réalisé, ce qui va à l'encontre des objectifs de réduction de masse poursuivis par l'utilisation des matériaux composite.

La présente invention vise à pallier ces inconvénients de l'art antérieur.

A cet effet, l'invention propose un procédé d'amélioration des propriétés mécaniques d'un assemblage en matériau composite tel que défini dans la revendication 1.

Cette solution permet d'améliorer les propriétés mécaniques d'un assemblage en matériau composite tout en évitant l'utilisation d'éléments rapportés tels des bagues métalliques.

L'invention couvre aussi un procédé de réalisation d'un assemblage en matériau composite incorporant les étapes du procédé d'amélioration et un assemblage ainsi réalisé.

D'autres caractéristiques et avantages ressortiront de la description qui va suivre de l'invention, description donnée à titre d'exemple uniquement, en regard des dessins annexés sur lesquels :
- la figure 1 illustre une vue en coupe d'une opération de matage selon le procédé d'amélioration des propriétés mécaniques d'un assemblage en matériau composite selon l'invention,
- la figure 2 illustre une vue de dessus d'une première variante opératoire d'une opération de matage selon le procédé d'amélioration des propriétés mécaniques d'un assemblage en matériau composite selon l' invention,
- la figure 3 illustre une vue de dessus d'une deuxième variante d'une opération de matage selon le procédé d'amélioration des propriétés mécaniques d'un assemblage en matériau composite selon l'invention.

La présente invention est relative à un procédé d'amélioration des propriétés mécaniques d'un assemblage en matériau composite.

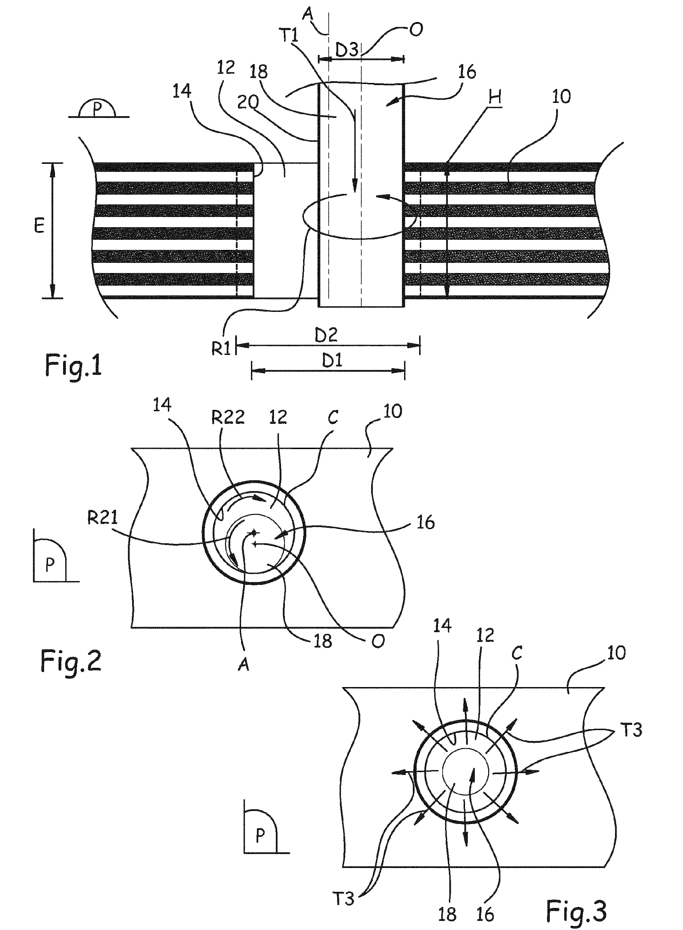

Comme illustré en figure 1, l'assemblage comprend au moins une pièce 10 en matériau composite dans laquelle est réalisé un alésage 12 destiné à recevoir un élément de fixation.

Ledit alésage peut être un trou borgne ou débouchant.

L'élément de fixation peut être une vis, un goujon, un rivet ou tout autre élément de fixation connu de l'homme du métier et utile à la réalisation d'un assemblage entre différentes pièces.

L'invention concerne plus particulièrement un assemblage d'un aéronef mais cette application n'est pas limitative.

L'alésage 12 est réalisé selon un axe central A dans l'épaisseur E de la pièce 10, par conséquent ledit axe central A est sensiblement perpendiculaire au plan P de stratification de la pièce 10 en matériau composite.

Afin d'améliorer les propriétés mécaniques du matériau composite constituant la paroi 14 de l'alésage, le procédé selon l'invention comprend une opération de matage de la paroi 14 de l'alésage.

En effet, on a constaté que la sollicitation en fatigue d'un matériau composite crée un phénomène ou une combinaison de phénomènes modifiant le matériau et améliorant sous certaines conditions les propriétés mécaniques, et notamment la résistance statique résiduelle, dudit matériau.

Par conséquent, l'opération de matage selon l'invention consiste à solliciteur en fatigue la paroi 14 de l'alésage.

Par matage, l'invention entend une déformation localisée du matériau composite obtenue par un choc ou l'application d'un effort.

De préférence, le matage est opéré sur toute la circonférence C de l'alésage 12 et sur toute la hauteur H de celui-ci.

Dans une première étape, le procédé selon l' invention comprend la réalisation, par exemple par perçage, de l'alésage 12 à un diamètre D1 initial inférieur au diamètre D2 final souhaité.

Ensuite, le procédé comprend l'étape de matage consistant à déformer à l'aide d'un outil de matage 16 le matériau composite constituant la paroi 14 de l'alésage.

Bien entendu, l'opération de matage et plus particulièrement l'action de l'outil de matage 16 est contrôlée de façon que les déformations engendrées agrandissent l'alésage 12 du diamètre D1 initial jusqu'au diamètre D2 final.

Parallèlement, l'opération de matage est aussi contrôlée de manière à ne pas endommager la structure de la pièce en matériau composite et à limiter l'apparition de défauts susceptibles de diminuer la résistance du matériau composite.

Plus précisément, durant l'opération de matage, l'outil de matage 16 est amené en contact plusieurs fois contre la paroi 14 de l'alésage de manière à déformer les extrémités des fibres du matériau composite situées au droit de l'alésage, lesdites fibres étant sensiblement parallèles au plan P de stratification de la pièce en matériau composite et donc sensiblement perpendiculaires à l'axe central A de l'alésage.

Avantageusement, le perçage de l'alésage au diamètre D1 nécessite moins de précision d'usinage, les tolérances strictes, notamment dans un assemblage d'aéronef, s'appliquant au diamètre D2 final.

La valeur du diamètre D1 est essentiellement dépendante du diamètre D2 final, du type de matériau composite de la pièce 10, et d'un compromis entre l'amélioration des propriétés mécaniques, notamment le gain en résistance statique, et les dommages engendrés dans le matériau composite.

L'outil de matage 16 prend de préférence la forme d'un pion métallique 18 et cylindrique de diamètre D3 inférieur au diamètre D1 initial de l'alésage 12 afin de pouvoir être introduit et déplacé facilement à l'intérieur de l'alésage.

Afin d'obtenir un faible taux d'usure et une bonne reproductibilité de l'opération de matage, l'outil de matage 16 est recouvert d'un revêtement de protection 20.

Moyennant une conception appropriée, l'élément de fixation reçu par l'alésage pour réaliser l'assemblage peut aussi être utilisé comme outil de matage. Comme illustré en figure 1, lorsqu'il est mis en contact contre la paroi 14 de l'alésage pour réaliser l'opération de matage et déformer les fibres du matériau composite, l'outil de matage 16 est animé d'un mouvement de matage.

Le mouvement de matage consiste en une translation T1 selon une direction parallèle à l'axe central A, en un mouvement de rotation R1 autour de l'axe central O de l'outil 16, ou en un mouvement combiné entre une translation T1 selon une direction parallèle à l'axe central A et une rotation R1 autour de l'axe central O.

Ensuite, diverses variantes opératoires peuvent être imaginées pour amener l'outil 16 animé de son mouvement de matage plusieurs fois en contact contre la paroi 14 de l'alésage.

Selon une première variante opératoire illustrée en figure 2, l'outil de matage 16 effectue des mouvements orbitaux à l'intérieur de l'alésage 12, l'outil 16 effectuant une rotation R21 par rapport à son axe central O et une rotation R22 par rapport à l'axe central A de l'alésage 12 de sorte à parcourir toute la circonférence C de l'alésage.

Selon une deuxième variante opératoire illustrée en figure 3, l'outil de matage 16 effectue des mouvements de translation radiaux à l'intérieur de l'alésage 12, l'outil 16 effectuant différentes translations T3 selon des directions radiales sensiblement perpendiculaires à l'axe central A de l'alésage.

Bien entendu, ces variantes opératoires ne sont pas limitatives et l'invention couvre aussi d'autres variantes opératoires pouvant être imaginées à partir d'autres trajets de l'outil de matage.

Concomitamment aux déformations des fibres du matériau composite obtenues lors de l'opération de matage, le matériau peut subir des élévations de température localisées susceptibles de modifier ses propriétés mécaniques. Aussi, l'action de l'outil de matage 16 est aussi contrôlée de façon que les élévations de température permettent de modifier et d'améliorer les propriétés mécaniques du matériau composite.

En complément pour mieux contrôler la modification de certains matériaux composites, et en plus des élévations de température localisées dues à l'action de l'outil de matage, il peut être prévu des moyens extérieurs de chauffage venant chauffer le matériau composite situé au droit de l'alésage avant et/ou pendant l'opération de matage.

Toujours concernant l'action de l'outil de matage 16, et dans l'une ou l'autre des variantes opératoires citées précédemment, les vitesses de rotation et/ou de translation, les débattements radiaux et/ou axiaux de l'outil 16 sont déterminés en fonction du type de matériau composite, du diamètre D2 final, de la conception de l'élément de fixation reçu dans l'alésage, et des performances souhaitées.

Correctement réalisée et paramétrée, l'opération de matage prévue par le procédé selon l'invention permet de respecter des tolérances géométriques strictes telles que celtes d'un assemblage d'aéronef.

L'amélioration des propriétés mécaniques obtenue grâce au procédé selon l'invention permet un gain de masse dans l'assemblage en évitant l'utilisation d'éléments rapportés, en réduisant le nombre et/ou le diamètre des éléments de fixation nécessaires à la tenue de l'assemblage, et/ou en autorisant un redimensionnement à la baisse de la pièce en matériau composite.

Selon un autre avantage, grâce aux améliorations des propriétés mécaniques obtenues, les exigences dimensionnelles et de rugosité d'un alésage réalisé dans une pièce en matériau composite peuvent être revues à la baisse, ce qui prolonge du même coup la durée de vie des outils coupants utilisés pour aléser.

Enfin, lors de l'utilisation d'un élément rapporté tel une bague métallique au niveau dudit alésage, les dommages causés par le montage de cet élément en interférence peuvent être amoindris et les performances de l'assemblage en fatigue accrues.

Enfin, la présente invention couvre un procédé de réalisation d'un assemblage en matériau composite incorporant le procédé selon l'invention suivi d'une étape de montage d'un élément de fixation dans l'alésage de la pièce en matériau composite, ainsi que l'assemblage en matériau composite obtenu par ce procédé.

## Revendications

1. Procédé d'amélioration des propriétés mécaniques d'un assemblage en matériau composite comprenant au moins une pièce (10) en matériau composite dans laquelle est réalisé un alésage (12) destiné à recevoir un élément de fixation, ledit procédé comprenant une opération de matage de la paroi (14) de l'alésage consistant à solliciter en fatigue la paroi (14) de l'alésage, et ledit procédé étant **caractérisé en ce qu'**il prévoit de réaliser l'alésage (12) à un diamètre (D1) initial inférieur au diamètre (D2) final souhaité, puis de déformer à l'aide d'un outil de matage (16) le matériau composite constituant la paroi (14) de l'alésage de façon que les déformations engendrées agrandissent l'alésage (12) du diamètre (D1) initial jusqu'au diamètre (D2) final.

2. Procédé selon la revendication 1, **caractérisé en ce que** le matage est opéré sur toute la circonférence (C) de l'alésage (12) et sur toute la hauteur (H) de celui-ci.

3. Procédé selon la revendication 2, **caractérisé en ce que** l'outil de matage (16) est amené en contact plusieurs fois contre la paroi (14) de l'alésage de manière à déformer les fibres du matériau composite situées au droit de l'alésage (12).

4. Procédé selon la revendication 3, **caractérisé en ce que** l'outil de matage (16) prend la forme d'un pion métallique (18), cylindrique de diamètre (D3) inférieur au diamètre (D1) initial de l'alésage (12), et recouvert d'un revêtement de protection (20).

5. Procédé selon l'une des revendications 1 à 4, **caractérisé en ce que**, lorsqu'i! est mis en contact contre la paroi (14) de l'alésage, l'outil de matage (16) est animé d'un mouvement de matage consistant en une translation (T1) selon une direction parallèle à l'axe central (A), en un mouvement de rotation (R1) autour de l'axe central (O) de l'outil (16), ou en un mouvement combiné entre une translation (T1) selon une direction parallèle à l'axe central (A) et une rotation (R1) autour de l'axe central (O).

6. Procédé selon la revendication 5, **caractérisé en ce que** l'outil (16) est amené en contact plusieurs fois contre la paroi (14) de l'alésage en effectuant des mouvements orbitaux à l'intérieur de l'alésage (12), l'outil (16) effectuant une rotation (21) par rapport à son axe central (O) et une rotation (R22) par rapport à l'axe central (A) de l'alésage (12) de sorte à parcourir toute la circonférence (C) de l'alésage.

7. Procédé selon la revendication 5, **caractérisé en ce que** l'outil (16) est amené en contact plusieurs fois contre la paroi (14) de l'alésage en effectuant des mouvements de translation radiaux à l'intérieur de l'alésage (12), l'outil (16) effectuant différentes translations (T3) selon des directions radiales sensiblement perpendiculaires à l'axe central (A) de l'alésage.

8. Procédé de réalisation d'un assemblage en matériau composite comprenant au moins une pièce (10) en matériau composite dans laquelle est réalisée un alésage (12) destiné à recevoir un élément de fixation, caractérisé en qu'il incorpore le procédé selon l'une des revendications précédentes, suivi d'une étape de montage d'un élément de fixation dans l'alésage de la pièce en matériau composite.

9. Assemblage en matériau composite obtenu par le procédé selon la revendication précédente.
